# EUROPEAN PATENT SPECIFICATION

(11) **EP 3 715 171 B1**
(45) Date of publication and mention of the grant of the patent: **13.07.2022**
(21) Application number: 19165113.2
(22) Date of filing: 26.03.2019
(51) Int. Cl.: B60L 58/21, B60L 50/64, B60L 50/60, B60L 3/12, H01M 10/02, H01M 10/42, H01M 10/48, H01M 50/20, H01M 50/502, H01M 50/581

(54) **FLEXPRINT FOR ENERGY STORAGE MODULE**
FLEXPRINT FÜR ENERGIESPEICHERMODUL
FLEXPRINT POUR MODULE DE STOCKAGE D'ÉNERGIE

(43) Date of publication of application: 30.09.2020
(73) Proprietor: ABB Schweiz AG, 5400 Baden (CH)
(72) Inventor: WICKI, Stefan, 5702 Niederlenz (CH); PFISTER, Stefan, 8953 Dietikon (CH); SCHUME, Matthias, 79787 Lauchringen (DE); SUTTER, Tanja, 5272 Gansingen (CH)
(74) Representative: Qip Patentanwälte Dr. Kuehn & Partner mbB

(56) References cited:
- EP-A1- 2 416 435
- US-A1- 2012 231 320
- US-A1- 2015 069 829
- US-A1- 2016 254 515
- US-A1- 2017 005 371
- US-A1- 2019 033 387

## Description

### FIELD OF THE INVENTION

The invention relates to an energy storage module, such as a battery module.

### BACKGROUND OF THE INVENTION

Electric and hybrid vehicles need means for storing electric energy. Usually, battery modules and capacitor modules are used to provide these means. In such an energy storage module, a plurality of energy storage elements may be assembled and interconnected.

In particular in battery modules, voltages of battery cells may have to be measured to prevent over- and undercharging. When a battery cell is used outside an allowed voltage window, it may be damaged. It may be that a cell voltage of at least every parallel connected battery cell has to be measured. It also may be beneficial to perform temperature measurements to prevent damaging of battery cells due to too fast charging and discharging.

These measurements usually are performed with a measurement unit integrated into the battery module. The measurement unit may be connected with wires to sensors and sensing points in the battery module.

US 2017 005 371 A1 relates to a vehicle energy-storage system, which comprises a plurality of prismatic cells stacked in a frame. A current carrier, which is connected to the poles of the cells, comprises several layers and may be made of a flexible circuit board. The current carrier may have a signal plane. Also module monitoring boards are mentioned.

US 2015 069 829 A1 relates to a battery module, which is made of a plurality of battery cells and which has flexible cell interconnects. US2019/033387A1 discloses an energy storage module, wherein a flexible substrate is provided as a single rectangular strip The flexprint comprises connector elements with conductor areas printed on the flexible plastics substrate for connecting the flexprint to the electrical conducting parts of the energy storage module and to the sensor board.

EP2416435A1 discloses a battery module comprising a battery block composed of a plurality of battery cells, and a voltage detecting circuit, wherein a flexible printed circuit board, in which a voltage detecting line for electrically connecting a positive electrode terminal or a negative electrode terminal of each of said battery cells and said voltage detecting circuit is integrated with a substrate made of a flexible material, is attached to said battery block.

### DESCRIPTION OF THE INVENTION

It is an objective of the invention to provide an economic and reliable energy storage module. It is a further objective of the invention to improve the accuracy of measurements in an energy storage module.

These objectives are achieved by the subject-matter of the independent claims. Further exemplary embodiments are evident from the dependent claims and the following description.

The invention relates to an energy storage module. For example, the energy storage module may be used in an electric and/or hybrid vehicle, such as an electric car, an electric train, an electric tram, etc. for storing electric energy, which is used for driving the vehicle. In particular, the energy storage module may be used in traction applications and/or may be used in a traction vehicle.

According to the invention, the energy storage module comprises a plurality of energy storage elements arranged in a holding frame, wherein the energy storage elements adapted for storing electric energy are electrically interconnected via their poles between inputs of the energy storage module.

The energy storage elements may be battery cells and/or capacitors. For example, prismatic battery cells may be used as storage elements. The energy storage elements may be connected in parallel and/or in series via their poles, for example with electrical conducting elements, such as metal plates or wires. Mechanically, the energy storage elements may be assembled in a holding frame, which may be made of metal sheets and/or plastics elements.

According to the invention, the energy storage module comprises a sensor board. The sensor board may be seen as a module measurement unit. The sensor board comprises a rigid circuit board with an electronic circuit for evaluating voltage measurements in the energy storage module. A rigid circuit board may comprise a rigid plastics plate with conductors provided in or on the plastics plate. The electronic circuit may comprise electronics elements attached to the rigid circuit board. The sensor board may be attached to the holding frame of the energy storage module.

According to the invention, the energy storage module comprises a flexprint with conductor lines on or in a flexible plastics substrate for interconnecting the sensor board with electrical conducting parts of the energy storage module. A flexprint may be a flexible circuit board. The flexprint may comprise conductors, such as conductor lines provided in or on the flexible substrate, such as a plastics foil. The conductor lines and/or the conductors may be printed on the flexible plastics substrate or a foil thereof.

Flexible may mean that the plastics substrate and/or the flexprint is bendable up to 90° without being damaged.

The flexprint may provide a signal connection between the energy storage elements and the sensor board. This may be used for voltage measurements and optionally for temperature measurements.

Since a plurality of conductors are combined in one member, i.e. the flexprint, mounting of the interconnections between the sensor board and the other parts of the module may be simplified and less error prone. Furthermore, the positioning of the conductor lines may be defined by the shape of the flexprint, which may make the measurement more accurate.

According to the invention, the flexprint comprises connector elements, the connector elements comprising conductor areas for connecting the flexprint to electrical conducting parts of the energy storage module and to the sensor board. The connector elements are provided at the ends of strip-shaped or strip-like sections of the flexprint, which may be called strip sections. A connector element may have a larger diameter as the strip-like section connected thereto. The conductor area also may be printed on the flexible plastics substrate. The conductor area may have a diameter 10 times larger than a diameter of a conductor line in the strip-like section.

The conductor element connected to the sensor board may comprise a plurality of conductor areas.

According to an embodiment of the invention, the flexprint comprises elongated strip sections, which interconnect the connector elements and which comprise at least one conductor line connecting the conductor areas of different connector elements. An elongated strip section may be shaped strip-like. One or more conductor lines may run along an extension direction of the strip sections. Elongated may mean that a diameter (extending in a plane, in which the flexprint extends) of the strip section is at least 5 times smaller than a length of the strip section.

According to the invention, the flexprint comprises a main branch connected to the connector element of the sensor board, the main branch comprising a plurality of parallel running conductor lines. The main branch may be a strip section, which collects the conductor lines running to different parts of the module.

According to the invention, the flexprint comprises a plurality of strip sections branching off the main branch. The branching strip sections interconnect a connector element with the main branch. At a connection area of the main branch with a branching strip section, the flexprint may be T-shaped.

According to an embodiment of the invention, strip sections are S-shaped bent. In particular, strip sections branching off the main branch may be S-shaped. An S-shape and/or S-curve in the flexprint may handle and/or compensate tolerances between the electrical conducting elements to which the conduction areas should be attached.

According to an embodiment of the invention, a conductor line comprises a fuse section, which has a thinner diameter compared to neighbouring sections and which is adapted for melting when an overcurrent is applied. The diameter may be determined in a direction along a plane, in which the flexprint extends or in a direction orthogonal to this plane. The fuse section may have a higher resistance as the neighbouring sections of the conductor line.

According to an embodiment of the invention, the fuse section is wave-like or meander-like shaped. The thin section of the conductor line optionally in combination with a wave-like or meander-like shape may act as fuse to prevent destroying of other parts of the energy storage module itself and/or to prevent a discharge of the energy storage elements. The flexprint may be exchanged to repair the module.

According to an embodiment of the invention, a fuse section is provided in a strip section branching off a main branch of the flexprint. It may be that a fuse section is provided in every strip section interconnecting a conductor area with the sensor board.

It is also possible that wave-like or meander-like shaped sections of the conductor line also may be used for resistance matching.

According to an embodiment of the invention, a conductor line comprises sections of different diameters. These sections may be used for resistance matching. Resistance matching between conductor lines may be used to compensate longer distances to have conductor lines with equal resistance. This may improve the comparability of voltage measurements at different positions. With resistance matching, the same voltage drop along the conductor lines may be achieved.

According to an embodiment of the invention, sections of conductor lines with a thinner diameter are located nearer to the sensor board than sections with a thicker diameter. Again, the diameter may be determined in a direction along a plane, in which the flexprint extends or in a direction orthogonal to this plane. It may be that conductor lines nearer to the sensor board are thinner and that conductor lines, which are located more far away, are wider.

According to an embodiment of the invention, a temperature sensor of the energy storage module is connected to a connector element of the flexprint. The temperature sensor may be connected via a conductor line of the flexprint to the sensor board. The sensor board also may evaluate signals from the temperature sensor, which may measure temperatures of the energy storage elements.The temperature sensor may be mounted to a rigid circuit board, which is connected to a connector element of the flexprint.

According to an embodiment of the invention, the electrical conducting parts to which the flexprint is connected are electrically connected to poles of the energy storage elements. For example, the connector areas of the flexprint are connected to metal plates and/or wires, which are in electrical contact with the poles.

According to an embodiment of the invention, the flexprint is arranged in one plane on a side of the energy storage module. It may be that the flexprint itself is flat and is not or substantially not bent, when mounted to the module.

According to an embodiment of the invention, the holding frame in which the energy storage elements are arranged provides brackets, which hold strip sections of the flexprint. At the connector elements, the flexprint may be mounted and/or mechanically connected to the module. The frame may provide further mounting points in the form of brackets. The brackets may be L-shaped and/or strip sections of the flexprint may be pushed under the brackets during mounting.

According to an embodiment of the invention, the energy storage elements are arranged, such that their poles are arranged on a pole side of the energy storage module. The poles of the energy storage elements all may be directed in the same direction. The energy storage elements may have prismatic housings, which are arranged in the frame side by side. Every energy storage element may be pushed into the frame and pulled out of the frame during mounting and/or repair.

The flexprint may be arranged on the pole side of the module, i.e. the side, where the poles of the energy storage elements are arranged. The flexprint may be mounted above the poles and the conductors interconnecting the poles.

According to an embodiment of the invention, the poles of adjacent energy storage elements are interconnected with interconnector plates. Such an interconnector plate may be a metal plate that is attached to two or more poles of neighbouring energy storage elements.

Some or all of the connector elements of the flexprint may be connected to interconnector plates. The connector areas of the connector elements may be in electrical contact with the respective interconnector elements and/or may transmit the voltage signal from there to the sensor board.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 shows a top view of an energy storage module according to an embodiment of the invention.
Fig. 2 shows a top view of a first part of a flexprint used in the energy storage module used in Fig. 1.
Fig. 3 shows a top view of a second part of the flexprint of Fig. 2.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

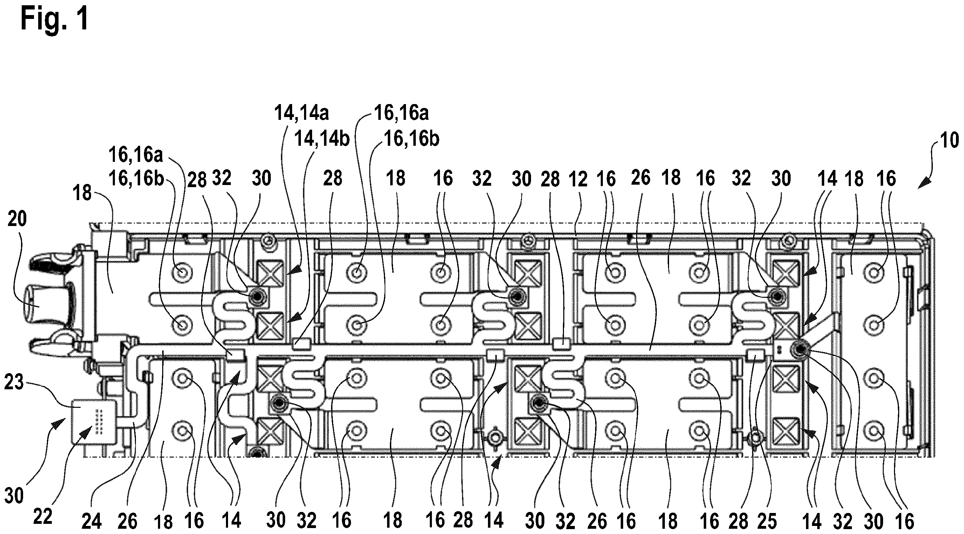

Fig. 1 shows a top view of a part of an energy storage module 10, which comprises a frame 12 and a plurality of energy storage elements 14, which may be battery cells and/or capacitors with a prismatic housing.

Each of the energy storage elements 14 comprises two poles 16. As examples, the poles of a first energy storage element 14a are referenced with 16a and the poles of a second energy storage element 14b are referenced with 16b. The energy storage elements 14a, 14b are electrically connected in parallel via two interconnector plates 18.

Further pairs of electrically parallel connected energy storage elements 14 are arranged in a row with the first pair 14a, 14b. These pairs of energy storage elements are connected in series. As shown in Fig. 1, further rows of energy storage elements 14 may be provided in the energy storage module 10, which also may comprise pairs of electrically parallel connected energy storage elements 14, which are connected in series with each other and with the first row.

The first pair of energy storage elements 14a, 14b are connected to an input 20 of the energy storage module 10. The last row of energy storage elements may be connected to a further input.

All the energy storage elements 14 are arranged such that their poles 16 are aligned in one plane on one side of the energy storage module 10, which may be seen as the top side. It has to be noted that the energy storage module 10 in general may be attached to an electric and/or hybrid vehicle, such that this side faces in any direction with respect to a vertical direction.

The poles 16 are electrically connected via interconnector plates 18, which may be metal plates for example made of copper or aluminium. Each of the interconnector plates 18 may be attached (such as screwed) to two or four poles 16. The interconnector plates 18 may be arranged in one plane.

Fig. 1 furthermore shows a sensor board 22, which comprises a rigid circuit board 23 and an electronic circuit, which is adapted for evaluating voltage and temperature measurements in the energy storage module 10. It may be that circuit board 23 comprises a plug into which further components of the sensor board 22 are plugged, such as a further rigid circuit board, which provided the electronic circuit.

The sensor board 22 and/or the rigid circuit board 23 are electrically connected via a flexprint 24 with the interconnector plates 18 and thus to the poles 16 of the interconnector plates 18. The flexprint 24 may be arranged in a plane above the poles 16. The flexprint 24 also provides an electrical connection to a temperature sensor 25, which is arranged on an opposite side of the energy storage module 10 with respect to the sensor board.

As shown in Fig. 1, the flexprint 24 is composed of strip-like sections 26, which are interconnected in the form of a tree. Some of the strip-like sections 26 are pushed under brackets 28 of the frame 12, which may be L-shaped. The brackets 28 may be provided by a part of the frame 12, which is made of plastics.

The flexprint 24 furthermore comprises connector elements 30 at the ends of the sections 26, which are attached to the interconnector plates 18 and to the sensor board 22. The connector elements 30, which arc attached to an interconnector plate 18, may be connected to the interconnector plate 18 by a screw 32.

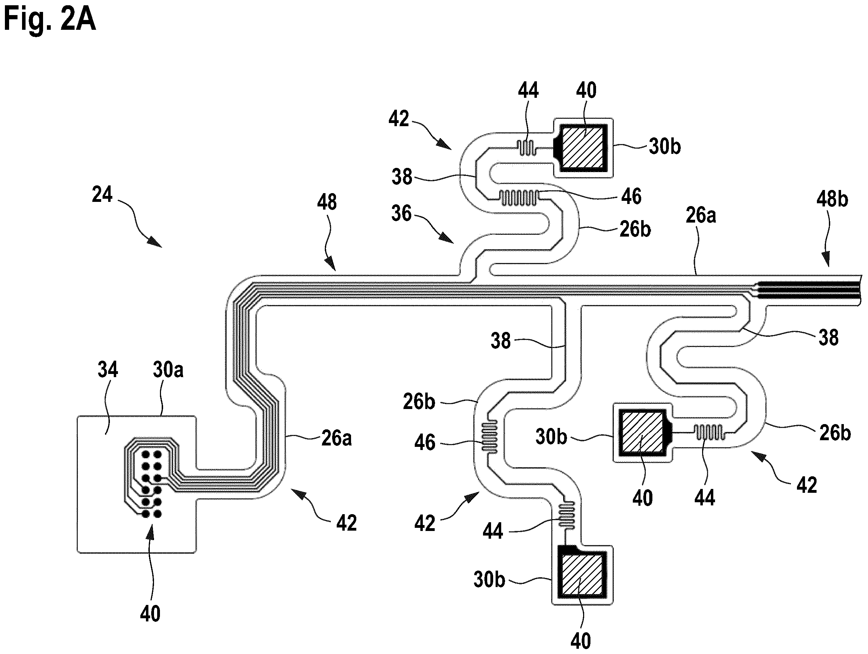

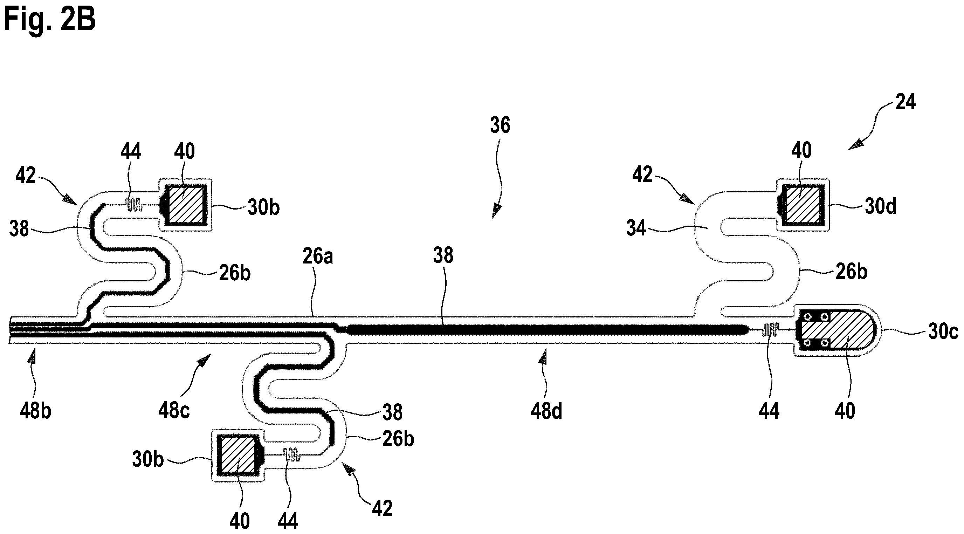

Fig. 2A and 2B show two parts of the flexprint 24 in more detail. The flexprint 24 comprises a one-piece flexible plastics substrate 34, which may be single plastics foil and/or several plastics foils connected to layers of the flexprint 24. Furthermore, the flexprint comprises at least one conducting layer 36, which is provided on or in the flexible plastics substrate 34. For example, the conducting layer 36 is printed on a plastics foil of the flexible plastics substrate 34. The conducting layer 36 may be made of metal material, such as copper.

The conducting layer 36 provides conductors of the flexprint 24, such as conductor lines 38 and conductor areas 40.

The conductor areas 40 are arranged in the connector elements 30a, 30b, 30c, 30d of the flexprint 24, while the conductor lines 38 are also arranged in the strip-like sections 26 of the flexprint 24.

The connector element 30a is used for connecting the flexprint 24 to the sensor board 22 and/or comprises a plurality of conductor areas 40.

The connector elements 30b, 30c are used for connecting the flexprint 24 to interconnector plates 18. The conductor lines 38 connected to the corresponding conductor areas 40 are used for transmitting a voltage signal from the interconnector plates 18 to the sensor board 22.

The connector element 30c is additionally used for electrically connecting the temperature sensor 25 to the sensor board 22. A corresponding conductor line 38 is not shown and may be provided besides the shown conductor lines or in another layer of the flexprint 24.

The connector element 30d is used for solely mechanically fixating the flexprint 24 to the module 10. Its optional contact area 40 is not connected to a conductor line.

In general, the flexprint 24 is tree-shaped and comprises a main branch 26a and branching strip sections 26b, which branch off the main branch 26a.

The main branch 26a and/or the strip sections 26b may comprise parts 42, which are S-shaped bent to compensate for tolerances of the parts of the module 10, the flexprint 24 is mounted to.

In the main branch 26a, a plurality of conductor lines 38 run parallel with each other. In the sections 26b, one or none conductor line 38 is running.

All conductor lines 38, which are used for transmitting measurement signals for voltage measurements at poles 16, comprise a fuse section 44, which has a thinner diameter compared to neighbouring sections of the conductor line and which is adapted for melting when an overcurrent is applied. The fuse sections 44 are wave-like or meander-like shaped.

Further resistor sections 46, which may be wave-like or meander-like shaped, may be used for resistance matching. A resistor section 46 may have the same diameter compared to neighbouring sections of the conductor line 38. The fuse sections 44 (and also the resistor sections 46) may be provided in the strip sections 26b, which branch off a main branch.

A further means for resistance matching are sections or parts 48a, 48b, 48c, 48d of the conductor lines 38, which have different diameters. As shown in Fig. 2A and 2B, there may be sections 48a, 48b, 48c, 48d with four different diameters. Sections 48a, 48b, 48c with a thinner diameter are located nearer to the sensor board 22 than sections 48b, 48c, 48d with a thicker diameter. The diameters of the sections 48a, 48b, 48c, 48d are increasing with increasing distance to the sensor beard 22.

### LIST OF REFERENCE SYMBOLS

- 10: energy storage module
- 12: frame
- 14: energy storage element
- 16: pole
- 18: interconnector plate
- 20: input
- 22: sensor board
- 23: rigid circuit board
- 24: flexprint
- 25: temperature sensor
- 26: section
- 26a: main branch
- 26b: branching strip sections
- 28: bracket
- 30: connector element
- 32: screw
- 34: flexible plastics substrate
- 36: conduction layer
- 38: conductor line
- 40: conductor area
- 42: S-shaped part
- 44: fuse section
- 46: resistor section
- 48: section of conductor line

## Claims

1. An energy storage module (10), comprising:
a plurality of energy storage elements (14) arranged in a holding frame (12), wherein the energy storage elements (14) are adapted for storing electric energy and are electrically interconnected via their poles (16) between inputs (20) of the energy storage module (10);
a sensor board (22) comprising a rigid circuit board (23) with an electronic circuit for evaluating voltage measurements in the energy storage module (10);
a flexprint (24) with conductor lines on or in a flexible plastics substrate for interconnecting the sensor board (22) with electrical conducting parts (18) of the energy storage module (10);
wherein the flexprint (24) comprises connector elements (30), the connector elements (30) comprising conductor areas (40) printed on the flexible plastics substrate for connecting the flexprint (24) to the electrical conducting parts (18) of the energy storage module (14) and to the sensor board (22);
wherein the flexprint (24) comprises a main branch (26a) connected to the connector element (30) of the sensor board (22), the main branch (26a) comprising a plurality of parallel running conductor lines (38) **characterised in that** the flexprint (24) comprises strip sections (26) with ends providing connector elements (30), which strip sections (26) interconnect the connector elements (30) and which comprise at least one conductor line (38) connecting the conductor areas (40) at different connector elements (30);
wherein the flexprint (24) comprises a plurality of strip sections (26b) branching off the main branch (26a).

2. The energy storage module (10) of claim 1,
wherein strip sections (26b) branching off the main branch (26a) are S-shaped bent.

3. The energy storage module (10) of one of the previous claims,
wherein a conductor line (38) comprises a fuse section (44), which has a thinner diameter compared to neighbouring sections and which is adapted for melting when an overcurrent is applied.

4. The energy storage module (10) of claim 3,
wherein the fuse section (44) is wave-like or meander-like shaped.

5. The energy storage module (10) of one of the previous claims,
wherein a fuse section (40) is provided in a strip section (26b) branching off the main branch (26a) of the flexprint (24).

6. The energy storage module (10) of one of the previous claims,
wherein a conductor line (38) comprises sections (48) of different diameters;
wherein sections (48a) of conductor lines (38) with a thinner diameter are located nearer to the sensor board than sections (48b) with a thicker diameter.

7. The energy storage module (10) of one of the previous claims,
wherein a temperature sensor (25) of the energy storage module (10) is connected to a connector element (30) of the flexprint (24);
wherein the temperature sensor (25) is connected via a conductor line of the flexprint (24) to the sensor board (22).

8. The energy storage module (10) of one of the previous claims,
wherein the electrical conducting parts (18) to which the flexprint (24) is connected are electrically connected to poles (16) of the energy storage elements (14).

9. The energy storage module of one of the previous claims,
wherein the flexprint (24) is arranged in one plane on a side of the energy storage module (10).

10. The energy storage module (10) of one of the previous claims,
wherein the holding frame (12) in which the energy storage elements (14) are arranged provides brackets (28), which hold strip sections (26) of the flexprint (24).

11. The energy storage module (10) of one of the previous claims,
wherein the energy storage elements (14) are arranged, such that their poles (16) are arranged on a pole side of the energy storage module (10);
wherein the flexprint (24) is arranged on the pole side.

12. The energy storage module (10) of claim 11,
wherein the poles (16) of adjacent energy storage elements (14) are interconnected with interconnector plates (18);
wherein connector elements (30) of the flexprint (24) are connected to interconnector plates (18).

13. The energy storage module (10) of one of the previous claims,
wherein the energy storage elements (14) are battery cells.

## Patentansprüche

1. Energiespeichermodul (10), das Folgendes umfasst:
eine Vielzahl von Energiespeicherelementen (14), die in einem Halterahmen (12) angeordnet sind, wobei die Energiespeicherelemente (14) zur Speicherung von elektrischer Energie angepasst sind und über ihre Pole (16) zwischen Eingängen (20) des Energiespeichermoduls (10) elektrisch miteinander verbunden sind;
eine Sensorplatine (22), die eine starre Leiterplatte (23) mit einer elektronischen Schaltung zur Auswertung von Spannungsmessungen im Energiespeichermodul (10) umfasst;
einen Flexprint (24) mit Leiterbahnen auf oder in einem flexiblen Kunststoffsubstrat zum Verbinden der Sensorplatine (22) mit elektrisch leitenden Teilen (18) des Energiespeichermoduls (10);
wobei der Flexprint (24) Verbindungselemente (30) umfasst, wobei die Verbinderelemente (30) Leiterbereiche (40) umfassen, die auf das flexible Kunststoffsubstrat gedruckt sind, um den Flexprint (24) mit den elektrisch leitenden Teilen (18) des Energiespeichermoduls (14) und mit der Sensorplatine (22) zu verbinden;
wobei der Flexprint (24) einen Hauptzweig (26a) aufweist, der mit dem Verbinderelement (30) der Sensorplatine (22) verbunden ist, wobei der Hauptzweig (26a) eine Vielzahl von parallel verlaufenden Leiterbahnen (38) aufweist, **dadurch gekennzeichnet, dass** der Flexprint (24) Streifenabschnitte (26) mit Enden aufweist, die Verbinderelemente (30) bereitstellen, wobei die Streifenabschnitte (26) die Verbinderelemente (30) miteinander verbinden, und die mindestens eine Leiterbahn (38) aufweisen, die die Leiterbereiche (40) an verschiedenen Verbinderelementen (30) verbindet;
wobei der Flexprint (24) eine Vielzahl von Streifenabschnitten (26b) umfasst, die von dem Hauptzweig (26a) abzweigen.

2. Energiespeichermodul (10) nach Anspruch 1,
wobei von dem Hauptzweig (26a) abzweigende Streifenabschnitte (26b) S-förmig gebogen sind.

3. Energiespeichermodul (10) nach einem der vorhergehenden Ansprüche,
wobei eine Leiterbahn (38) einen Schmelzabschnitt (44) aufweist, der im Vergleich zu benachbarten Abschnitten einen dünneren Durchmesser hat, und der zum Schmelzen angepasst ist, wenn ein Überstrom angelegt wird.

4. Energiespeichermodul (10) nach Anspruch 3,
wobei der Schmelzabschnitt (44) wellenförmig oder mäanderförmig ist.

5. Energiespeichermodul (10) nach einem der vorhergehenden Ansprüche,
wobei ein Schmelzabschnitt (40) in einem vom Hauptzweig (26a) des Flexprints (24) abzweigenden Streifenabschnitt (26b) vorgesehen ist.

6. Energiespeichermodul (10) nach einem der vorhergehenden Ansprüche,
wobei eine Leiterbahn (38) Abschnitte (48) mit unterschiedlichen Durchmessern aufweist;
wobei Abschnitte (48a) von Leiterbahnen (38) mit einem dünneren Durchmesser näher an der Sensorplatine angeordnet sind als Abschnitte (48b) mit einem dickeren Durchmesser.

7. Energiespeichermodul (10) nach einem der vorhergehenden Ansprüche,
wobei ein Temperatursensor (25) des Energiespeichermoduls (10) mit einem Verbinderelement (30) des Flexprints (24) verbunden ist;
wobei der Temperatursensor (25) über eine Leiterbahn des Flexprints (24) mit der Sensorplatine (22) verbunden ist.

8. Energiespeichermodul (10) nach einem der vorhergehenden Ansprüche,
wobei die elektrisch leitenden Teile (18), mit denen der Flexprint (24) verbunden ist, mit den Polen (16) der Energiespeicherelemente (14) elektrisch verbunden sind.

9. Energiespeichermodul nach einem der vorhergehenden Ansprüche,
wobei der Flexprint (24) in einer Ebene an einer Seite des Energiespeichermoduls (10) angeordnet ist.

10. Energiespeichermodul (10) nach einem der vorhergehenden Ansprüche,
wobei der Halterahmen (12), in dem die Energiespeicherelemente (14) angeordnet sind, Halterungen (28) aufweist, die Streifenabschnitte (26) des Flexprints (24) halten.

11. Energiespeichermodul (10) nach einem der vorhergehenden Ansprüche,
wobei die Energiespeicherelemente (14) so angeordnet sind, dass ihre Pole (16) auf einer Polseite des Energiespeichermoduls (10) angeordnet sind;
wobei der Flexprint (24) auf der Polseite angeordnet ist.

12. Energiespeichermodul (10) nach Anspruch 11,
wobei die Pole (16) benachbarter Energiespeicherelemente (14) durch Verbinderplatten (18) miteinander verbunden sind;
wobei Verbinderelemente (30) des Flexprints (24) mit Verbinderplatten (18) verbunden sind.

13. Energiespeichermodul (10) nach einem der vorhergehenden Ansprüche,
wobei die Energiespeicherelemente (14) Batteriezellen sind.

## Revendications

1. Module de stockage d'énergie (10), comprenant :
une pluralité d'éléments de stockage d'énergie (14) agencés dans un cadre de maintien (12), les éléments de stockage d'énergie (14) étant adaptés à stocker de l'énergie électrique et étant interconnectés électriquement par le biais de leurs pôles (16) entre des entrées (20) du module de stockage d'énergie (10) ;
une carte de capteur (22) comprenant une carte de circuit rigide (23) pourvue d'un circuit électronique destiné à évaluer des mesures de tension dans le module de stockage d'énergie (10) ;
un circuit imprimé flexible (24) pourvu de lignes conductrices sur ou dans un substrat en plastique flexible destinées à interconnecter la carte de capteur (22) à des parties électriques conductrices (18) du module de stockage d'énergie (10) ;
le circuit imprimé flexible (24) comprenant des éléments de connexion (30), les éléments de connexion (30) comprenant des zones conductrices (40) imprimées sur la substrat en plastique flexible destinées à connecter le circuit imprimé flexible (24) aux parties électriques conductrices (18) du module de stockage d'énergie (14) et à la carte de capteur (22) ;
le circuit imprimé flexible (24) comprenant une branche principale (26a) connectée à l'élément de connexion (30) de la carte de capteur (22), la branche principale (26a) comprenant une pluralité de lignes conductrices en parallèle (38),
**caractérisé en ce que** le circuit imprimé flexible (24) comprend des segments de ruban (26) dont les extrémités fournissent des éléments de connexion (30), lesquels segments de ruban (26) interconnectent les éléments de connexion (30) et comprennent au moins une ligne conductrice (38) connectant les zones conductrices (40) au niveau d'éléments de connexion (30) différents ;
le circuit imprimé flexible (24) comprenant une pluralité de segments de ruban (26b) qui bifurquent de la branche principale (26a).

2. Module de stockage d'énergie (10) selon la revendication 1,
dans lequel des segments de ruban (26b) qui bifurquent de la branche principale (26a) sont recourbés en forme de S.

3. Module de stockage d'énergie (10) selon l'une des revendications précédentes,
dans lequel une ligne conductrice (38) comprend un segment fusible (44), lequel présente un diamètre plus mince que celui de segments voisins et est adapté à fondre en cas d'application d'une surintensité.

4. Module de stockage d'énergie (10) selon la revendication 3,
dans lequel le segment fusible (44) prend la forme d'une ondulation ou d'un méandre.

5. Module de stockage d'énergie (10) selon l'une des revendications précédentes,
dans lequel un segment fusible (40) est placé dans un segment de ruban (26b) qui bifurque de la branche principale (26a) du circuit imprimé flexible (24).

6. Module de stockage d'énergie (10) selon l'une des revendications précédentes,
dans lequel une ligne conductrice (38) comprend des segments (48) de diamètres différents ;
dans lequel des segments (48a) de lignes conductrices (38) pourvus d'un diamètre plus mince sont situés plus près de la carte de capteur que des segments (48b) pourvus d'un diamètre plus épais.

7. Module de stockage d'énergie (10) selon l'une des revendications précédentes,
dans lequel un capteur de température (25) du module de stockage d'énergie (10) est connecté à un élément de connexion (30) du circuit imprimé flexible (24) ;
dans lequel le capteur de température (25) est connecté, par le biais d'une ligne conductrice du circuit imprimé flexible (24), à la carte de capteur (22).

8. Module de stockage d'énergie (10) selon l'une des revendications précédentes,
dans lequel les parties électriques conductrices (18) auxquelles le circuit imprimé flexible (24) est connecté sont connectées électriquement à des pôles (16) des éléments de stockage d'énergie (14).

9. Module de stockage d'énergie selon l'une des revendications précédentes,
dans lequel le circuit imprimé flexible (24) est agencé dans un plan d'un côté du module de stockage d'énergie (10).

10. Module de stockage d'énergie (10) selon l'une des revendications précédentes,
dans lequel le cadre de maintien (12) dans lequel les éléments de stockage d'énergie (14) sont agencés procure des supports (28), lesquels maintiennent des segments de ruban (26) du circuit imprimé flexible (24).

11. Module de stockage d'énergie (10) selon l'une des revendications précédentes,
dans lequel les éléments de stockage d'énergie (14) sont agencés de telle sorte que leurs pôles (16) soient agencés d'un côté pôles du module de stockage d'énergie (10) ;
dans lequel le circuit imprimé flexible (24) est agencé du côté pôles.

12. Module de stockage d'énergie (10) selon la revendication 11,
dans lequel les pôles (16) d'éléments de stockage d'énergie (14) adjacents sont interconnectés à des plaques d'interconnexion (18) ;
dans lequel des éléments de connexion (30) du circuit imprimé flexible (24) sont connectés à des plaques d'interconnexion (18).

13. Module de stockage d'énergie (10) selon l'une des revendications précédentes,
dans lequel les éléments de stockage d'énergie (14) sont des cellules de batterie.
